# EUROPEAN PATENT APPLICATION

(11) **EP 4 198 869 A1**
(43) Date of publication of application: **21.06.2023**
(21) Application number: 20953587.1
(22) Date of filing: 16.09.2020
(51) Int. Cl.: G06T 1/20

(54) **ELECTRONIC APPARATUS, AND IMAGE PROCESSING METHOD FOR ELECTRONIC APPARATUS**

(71) Applicant: Huawei Technologies Co., Ltd., Shenzhen, Guangdong 518129 (CN)
(72) Inventor: HUANG, Fei, Shenzhen, Guangdong 518129 (CN); HU, Cui, Shenzhen, Guangdong 518129 (CN); ZHANG, Weicheng, Shenzhen, Guangdong 518129 (CN); CHU, Jieyu, Shenzhen, Guangdong 518129 (CN); QIN, Qiushi, Shenzhen, Guangdong 518129 (CN)
(74) Representative: Thun, Clemens
(86) International application number: PCT/CN2020/115590
(87) International publication number: WO 2022/056729

(57) **Abstract**

Embodiments of this application provide an electronic apparatus and an image processing method of the electronic apparatus. The electronic apparatus includes: an artificial intelligence AI processor, configured to perform first image signal processing on a first image signal to obtain a second image signal, where the first image signal is obtained based on image data output by an image sensor; and an image signal processor ISP, configured to perform second image signal processing on the second image signal to obtain an image processing result. In this way, image processing can be flexibly performed by the ISP in combination with the AI processor, and the image processing result is improved.

## Description

### TECHNICAL FIELD

Embodiments of this application relate to the field of electronic technologies, and in particular, to an electronic apparatus and an image processing method of the electronic apparatus.

### BACKGROUND

With progress of electronic science and technology, more and more functions are integrated into an intelligent terminal. Thanks to development of image processing technologies, more and more users like to use the intelligent terminal device to perform photographing, video recording, video calling, and the like.

Due to a limited computing capability of an algorithm of an image signal processor (ISP, Image Signal Processor) in the intelligent terminal, to improve image processing effect, the industry proposes a combination of a conventional image processing algorithm and an artificial intelligence (AI, Artificial Intelligence) technology. For example, an AI processor is disposed at a back end of the ISP to provide an additional calibration to an ISP image processing result, that is, AI post-processing is performed. In a specific implementation, the ISP stores a processed image to an off-chip memory; and the AI processor reads, from the off-chip memory, the image stored by the ISP, and further corrects the image based on ISP image processing, to generate a final image. In this solution, because the capability of the conventional ISP has a bottleneck, information loss occurs after original image data collected by an image sensor is processed by the ISP, thereby lowering the image processing effect. Although the AI post-processing technology can improve the image processing result output by the ISP to some extent, effect is still unsatisfactory. Therefore, a problem of the poor processing effect of the conventional ISP cannot be fully resolved in the conventional technology.

### SUMMARY

This application provides an electronic apparatus and an image processing method of the electronic apparatus, to improve image processing effect. To implement the foregoing objective, the following technical solutions are used in this application.

According to a first aspect, an embodiment of this application provides an electronic apparatus. The electronic apparatus includes: an artificial intelligence AI processor, configured to perform first image signal processing on a first image signal to obtain a second image signal, where the first image signal is obtained based on image data output by an image sensor; and an image signal processor ISP, configured to perform second image signal processing on the second image signal to obtain an image processing result.

After the AI processor processes the image data, the ISP performs other image processing. In an entire image signal processing process, a processing capability of the AI processor may be fully used, so that the AI processor replaces a conventional ISP to perform some processing processes, thereby improving quality of the image processing result output by the ISP.

With reference to the first aspect, in a possible implementation, the ISP is further configured to: receive the image data from the image sensor, and perform third image signal processing on the image data to obtain the first image signal.

In this implementation, a first image processing process performed by the AI processor may be set among a plurality of image processing processes performed by the ISP, and the AI processor may replace the ISP to perform some processing processes in the image processing processes, to achieve preset effect, improve flexibility of combining the AI processor with the ISP, and improve image processing effect.

With reference to the first aspect, in a possible implementation, the third image signal processing includes a plurality of processing processes, and in two adjacent processing processes in the plurality of processing processes, a previous processing process is used to generate a third image signal, and a next processing process is used to process a fourth image signal; and the AI processor is further configured to perform fourth image signal processing on the third image signal to obtain the fourth image signal. In this solution, flexibility of performing the image processing process by using the AI processor is further improved.

With reference to the first aspect, in a possible implementation, the first image signal processing includes at least one of the following processing processes: noise cancellation, black level calibration, shadow calibration, white balance calibration, demosaicing, color difference calibration, or gamma calibration.

With reference to the first aspect, in a possible implementation, the second image signal processing includes at least one of the following processing processes: noise cancellation, black level calibration, shadow calibration, white balance calibration, demosaicing, color difference calibration, gamma calibration, color difference calibration, or RGB-to-YUV domain conversion.

With reference to the first aspect, in a possible implementation, the third image signal processing includes at least one of the following processing processes: noise cancellation, black level calibration, shadow calibration, white balance calibration, or demosaicing.

With reference to the first aspect, in a possible implementation, the fourth image signal processing includes at least one of the following processing processes: black level calibration, shadow calibration, white balance calibration, demosaicing, or color difference calibration.

With reference to the first aspect, in a possible implementation, the electronic apparatus further includes a memory, coupled to the AI processor and the ISP, and configured to transfer a first image unit in any image signal between the AI processor and the ISP.

With reference to the first aspect, in a possible implementation, the memory, the AI processor, and the ISP are located in a system on chip in the electronic apparatus, and the memory includes an on-chip random access memory RAM.

With reference to the first aspect, in a possible implementation, the first image unit includes any one of the following: a single frame of image or an image block in a single frame of image.

With reference to the first aspect, in a possible implementation, the electronic apparatus further includes: an off-chip memory, located outside the system on chip, and configured to transfer a second image unit in any image signal between the AI processor and the ISP, where the second image unit includes a plurality of frames of images.

With reference to the first aspect, in a possible implementation, the electronic apparatus further includes a controller, configured to trigger the AI processor to execute the first image signal processing, and control the ISP to execute the second image signal processing.

With reference to the first aspect, in a possible implementation, an interrupt signal is transmitted between the AI processor and the ISP through an electronic line connection. Optionally, the electronic line connection includes a connection by using an interrupt controller. The interrupt signal is transmitted by setting the electronic line connection between the AI processor and the ISP, and does not need to be forwarded by another processor such as a CPU. This can improve a signal transmission speed, and can reduce an image output delay in some real-time videos, which helps improve user experience.

Optionally, the electronic apparatus further includes the image sensor.

According to a second aspect, an embodiment of this application provides an image processing method of an electronic apparatus. The image processing method includes: controlling an artificial intelligence AI processor to perform first image signal processing on a first image signal to obtain a second image signal, where the first image signal is obtained based on image data output by an image sensor; and controlling an image signal processor ISP to perform second image signal processing on the second image signal to obtain an image processing result.

With reference to the second aspect, in a possible implementation, before the controlling an artificial intelligence AI processor to perform first image signal processing on a first image signal, the method further includes: controlling the ISP to receive the image data from the image sensor, and performing third image signal processing on the image data to obtain the first image signal.

According to the second aspect, in a possible implementation, the third image signal processing includes a plurality of processing processes, and in two adjacent processing processes in the plurality of processing processes, a previous processing process is used to generate a third image signal, and a next processing process is used to process a fourth image signal; and the method further includes: controlling the AI processor to perform fourth image signal processing on the third image signal to obtain the fourth image signal.

With reference to the second aspect, in a possible implementation, the first image signal processing includes at least one of the following processing processes: noise cancellation, black level calibration, shadow calibration, white balance calibration, demosaicing, color difference calibration, or gamma calibration.

With reference to the second aspect, in a possible implementation, the second image signal processing includes at least one of the following processing processes: noise cancellation, black level calibration, shadow calibration, white balance calibration, demosaicing, color difference calibration, gamma calibration, color difference calibration, or RGB-to-YUV domain conversion.

With reference to the second aspect, in a possible implementation, the third image signal processing includes at least one of the following processing processes: noise cancellation, black level calibration, shadow calibration, white balance calibration, or demosaicing.

With reference to the second aspect, in a possible implementation, the fourth image signal processing includes at least one of the following processing processes: black level calibration, shadow calibration, white balance calibration, demosaicing, or color difference calibration.

According to a third aspect, an embodiment of this application provides an image processing apparatus. The image processing apparatus includes: an AI processing module, configured to perform first image signal processing on a first image signal to obtain a second image signal, where the first image signal is obtained based on image data output by an image sensor; and an image signal processing module, configured to perform second image signal processing on the second image signal to obtain an image processing result.

With reference to the third aspect, in a possible implementation, the image signal processing module is further configured to: receive the image data from the image sensor, and perform third image signal processing on the image data to obtain the first image signal.

With reference to the third aspect, in a possible implementation, the third image signal processing includes a plurality of processing processes, and in two adjacent processing processes in the plurality of processing processes, a previous processing process is used to generate a third image signal, and a next processing process is used to process a fourth image signal; and the AI processing module is further configured to perform fourth image signal processing on the third image signal to obtain the fourth image signal.

With reference to the third aspect, in a possible implementation, the first image signal processing includes at least one of the following processing processes: noise cancellation, black level calibration, shadow calibration, white balance calibration, demosaicing, color difference calibration, or gamma calibration.

With reference to the third aspect, in a possible implementation, the second image signal processing includes at least one of the following processing processes: noise cancellation, black level calibration, shadow calibration, white balance calibration, demosaicing, color difference calibration, gamma calibration, color difference calibration, or RGB-to-YUV domain conversion.

With reference to the third aspect, in a possible implementation, the third image signal processing includes at least one of the following processing processes: noise cancellation, black level calibration, shadow calibration, white balance calibration, or demosaicing.

With reference to the third aspect, in a possible implementation, the fourth image signal processing includes at least one of the following processing processes: black level calibration, shadow calibration, white balance calibration, demosaicing, or color difference calibration.

According to a fourth aspect, an embodiment of this application provides an electronic apparatus. The electronic apparatus includes a memory and at least one processor, the memory is configured to store computer programs, and the at least one processor is configured to invoke all or some of the computer programs stored in the memory, to perform the method according to the second aspect. The at least one processor includes an AI processor and an ISP. Optionally, the electronic apparatus further includes an image sensor.

According to a fifth aspect, an embodiment of this application provides a system on chip, where the system on chip includes at least one processor and an interface circuit, the interface circuit is configured to obtain a computer program from outside of the chip system, and the computer program is executed by the at least one processor to implement the method according to the second aspect. The at least one processor includes an AI processor and an ISP.

According to a sixth aspect, an embodiment of this application provides a computer-readable storage medium. The computer-readable storage medium stores a computer program, where the computer program is executed by at least one processor to implement the method according to the second aspect. The at least one processor includes an AI processor and an ISP.

According to a seventh aspect, an embodiment of this application provides a computer program product, and when being executed by at least one processor, the computer program product is used to implement the method according to the second aspect. The at least one processor includes an AI processor and an ISP.

It should be understood that technical solutions in the second to the seventh aspects of this application are consistent with that in the first aspect. Beneficial effect achieved by the various aspects and corresponding implementations is similar, and details are not described again.

### BRIEF DESCRIPTION OF DRAWINGS

To describe technical solutions in embodiments of this application more clearly, the following briefly introduces the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of a hardware structure of an electronic apparatus according to an embodiment of this application;
FIG. 2 is a schematic flowchart of an image processing method according to an embodiment of this application;
FIG. 3 is a schematic diagram of another hardware structure of an electronic apparatus according to an embodiment of this application;
FIG. 4 is a schematic diagram of still another hardware structure of an electronic apparatus according to an embodiment of this application;
FIG. 5 is another schematic flowchart of an image processing method according to an embodiment of this application;
FIG. 6 is still another schematic flowchart of an image processing method according to an embodiment of this application;
FIG. 7 is a schematic diagram of yet another hardware structure of an electronic apparatus according to an embodiment of this application;
FIG. 8 is a schematic diagram of still yet another hardware structure of an electronic apparatus according to an embodiment of this application; and
FIG. 9 is a schematic diagram of a software structure of an electronic apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The word "first", "second", or the like mentioned in this specification does not indicate any order, quantity, or importance, but is used only for distinguishing between different components. Likewise, the word "a/an", "one", or the like is not intended to indicate a quantity limitation either, but is intended to indicate at least one. The word "coupling", or the like is not limited to a physical or mechanical direct connection, but may include an electrical connection, whether directly or indirectly. It is equivalent to a connection in a broad sense.

In addition, in embodiments of this application, the word "an example" or "for example" is used to represent giving an example, an illustration, or a description. Any embodiment or design scheme described as an "an example" or "for example" in embodiments of this application should not be explained as being more preferred or having more advantages than another embodiment or design scheme. Exactly, use of the word "an example", "for example", or the like is intended to present a related concept in a specific manner. In the description of the embodiment of this application, unless otherwise stated, "a plurality of" means two or more than two. For example, a plurality of processors mean two or more processors.

An electronic apparatus provided in embodiments of this application may be an electronic device, or a module, a chip, a chipset, a circuit board, or a component integrated into the electronic device. The electronic device may be user equipment (User Equipment, UE), for example, various types of devices such as a mobile phone, a tablet computer, a smart screen, or an image capturing device. The electronic device may be provided with a photographing apparatus, and the photographing apparatus may also be referred to as an image sensor, to collect image data. The electronic device may further be installed with various software applications that are used to drive the photographing apparatus to capture an image, such as a photographing application, a video calling application, or an online video shooting application. A user may start the foregoing various types of applications to take a photo or a video by using the photographing apparatus. In addition, the user may further perform personalized settings of various types of image beautification by using these types of applications. The video calling application is used as an example. The user may select, during a video call, to perform automatic adjustment (for example, "one-click beautification") on an image (for example, a presented facial portrait or a presented background image) presented on a screen. After the user starts the foregoing various types of applications or starts the foregoing various types of applications and selects image beautification, an image processing service supported by the foregoing various types of applications in the electronic device may trigger the electronic device to process image data collected by the photographing apparatus, to present a processed image on the screen of the electronic device, thereby achieving image beautification effect. The image beautification may include, for example, but is not limited to: increasing brightness of a part or the entire image, changing a display color of the image, performing skin smoothing on a face object presented in the image, adjusting image saturation, adjusting image exposure, adjusting image brightness, adjusting image highlight, adjusting image contrast, adjusting image sharpness, or adjusting image definition. The image processing described in this embodiment of this application may include but not be limited to: noise cancellation, black level calibration, shadow calibration, white balance calibration, demosaicing, color difference calibration, gamma calibration, or red-green-blue (RGB)-to-YUV (YCrCb) domain conversion, thereby achieving the foregoing image beautification effect. Based on the electronic apparatus in this embodiment of this application, in a specific application scenario, after a user A starts the image processing service, when a video call is performed between the user A and a user B, an image presented on a screen of an electronic device used by the user A and an image of the user A presented on a screen of an electronic device used by the user B may be images processed by the electronic apparatus in this embodiment of this application. In addition, the processed images are always presented until the user A ends the video call with the user B or the user A disables the image processing service.

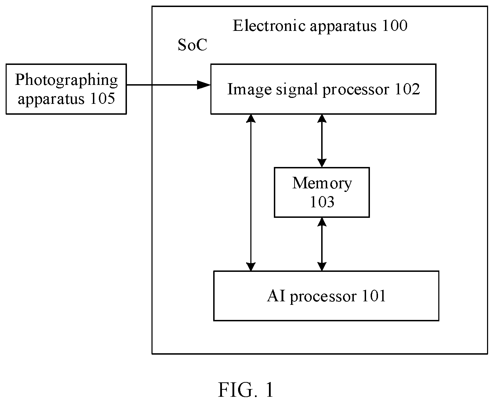

Based on the foregoing application scenario, still refer to FIG. 1. FIG. 1 is a schematic diagram of a hardware structure of an electronic apparatus according to an embodiment of this application. The electronic apparatus 100 may be specifically, for example, a chip or a chipset, a circuit board mounted with a chip or a chipset, or an electronic device including the circuit board, but is not intended to limit embodiments. A specific electronic device is described above, and is omitted herein. The chip, the chipset, or the circuit board mounted with the chip or the chipset may work when driven by necessary software. The electronic apparatus 100 includes one or more processors, for example, an ISP 102 and an AI processor 101. Optionally, the one or more processors may be integrated into one or more chips. The one or more chips may be considered as a chipset. When the one or more processors are integrated into a same chip, the chip is also referred to as a system on chip (System on a Chip, SoC). In addition to the one or more processors, the electronic apparatus 100 further includes one or more other necessary components, for example, a memory 103. In a possible implementation, the memory 103, and the AI processor 101 and the ISP 102 may be located in a same system on chip in the electronic apparatus 100. In other words, the memory 103 is integrated into the SoC shown in FIG. 1. In this case, the memory 103 may include an on-chip random access memory (RAM, Random Access Memory).

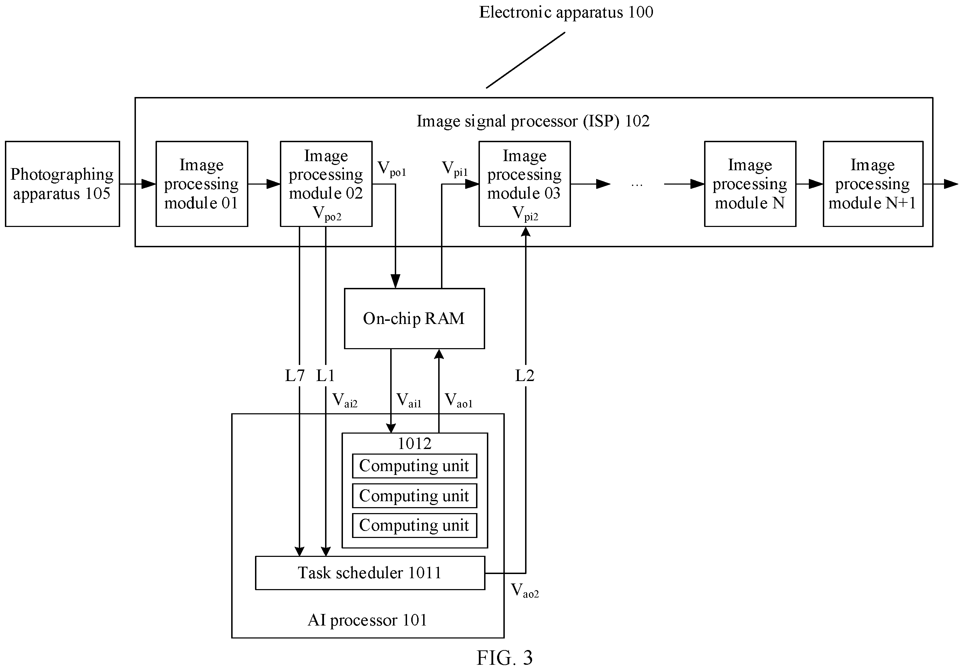

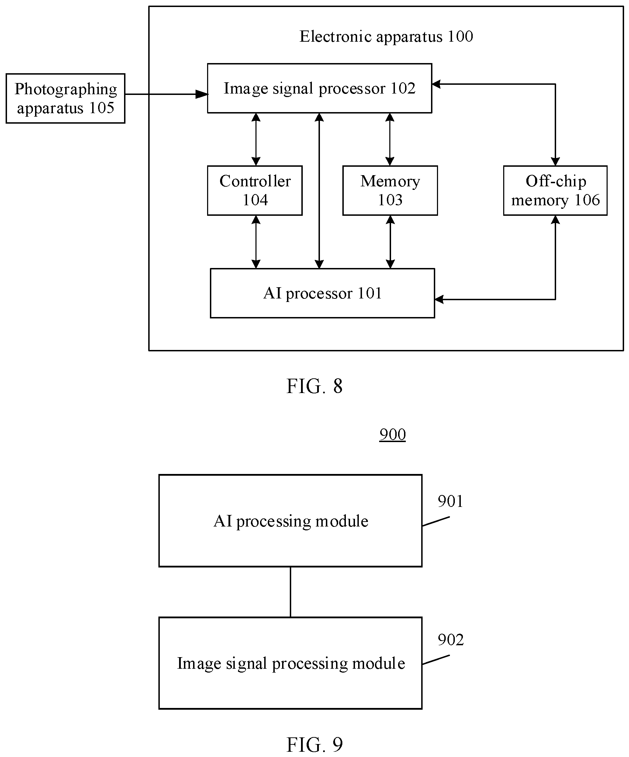

In this embodiment of this application, the AI processor 101 may include a dedicated neural processor such as a neural network processor (Neural-network Processing Unit, NPU), and includes but is not limited to a convolutional neural network processor, a tensor processor, or a neural processing engine. The AI processor may be independently used as a component or integrated into another digital logic device. The digital logic device includes but is not limited to: a CPU (central processing unit, Central Processing Unit), a GPU (graphics processing unit, Graphics Processing Unit), or a DSP (digital signal processor, Digital Signal Processor). For example, the CPU, the GPU, and the DSP are all processors in the system on chip. The AI processor 101 may perform one or more image processing operations. The one or more image processing operations may include but are not limited to: noise cancellation, black level calibration, shadow calibration, white balance calibration, demosaicing, color difference calibration, or gamma calibration. The AI processor 101 may run one or more image processing models, and each image processing model is configured to perform a specific image processing operation. For example, an image processing model for noise cancellation is used to perform an image processing operation for noise cancellation, and an image processing model for demosaicing is used to perform an image processing operation for demosaicing. Each image processing model may be obtained by training a neural network based on a training sample in a conventional neural network training method. Details are not described in this embodiment of this application. The ISP 102 may be configured with a plurality of hardware modules or run a necessary software program to process an image or communicate with the AI processor 101. The ISP 102 and the AI processor 101 may communicate with each other in a hardware direct connection manner (for example, related descriptions in embodiments shown in FIG. 3, FIG. 4, and FIG. 7), or may communicate with each other in a signal forwarding manner by using a controller. For related descriptions of communication between the ISP 102 and the AI processor 101 in the signal forwarding manner by using the controller, refer to related descriptions of the controller 104 shown in FIG. 8.

In this embodiment of this application, image data obtained from a photographing apparatus 105 may be processed by using a plurality of image processing processes to generate a final image processing result. The plurality of image processing processes may include but are not limited to: noise cancellation, black level calibration, shadow calibration, white balance calibration, demosaicing, color difference calibration, gamma calibration, or RGB-to-YUV domain conversion. The AI processor 101 may perform one or more processes in the foregoing image processing processes, that is, corresponding to the foregoing one or more image processing operations, the ISP 102 may also perform one or more processes in the foregoing image processing processes. The AI processor 101 and the ISP 102 may perform different image processing processes. In addition, the AI processor 101 and the ISP 102 may also perform a same image processing process, for example, perform further enhancement processing. This is not limited in this embodiment. When the AI processor 101 and the ISP 102 perform the same image processing process, image processing performed by the AI processor 101 may be used as enhancement or supplement to the image processing processes. For example, when the AI processor 101 and the ISP 102 simultaneously perform a noise cancellation process, the ISP 102 is configured to perform initial denoising, and the AI processor 101 is configured to perform secondary denoising based on the initial denoising of the ISP 102. Therefore, the entire image processing process includes a plurality of processing processes, and the plurality of processing processes are allocated to the AI processor 101 and the ISP 102 as tasks. This is equivalent to that before the ISP 102 completes all the processing processes, the AI processor 101 replaces a conventional ISP to perform some processing processes, and a final processing result is output by the ISP 102.

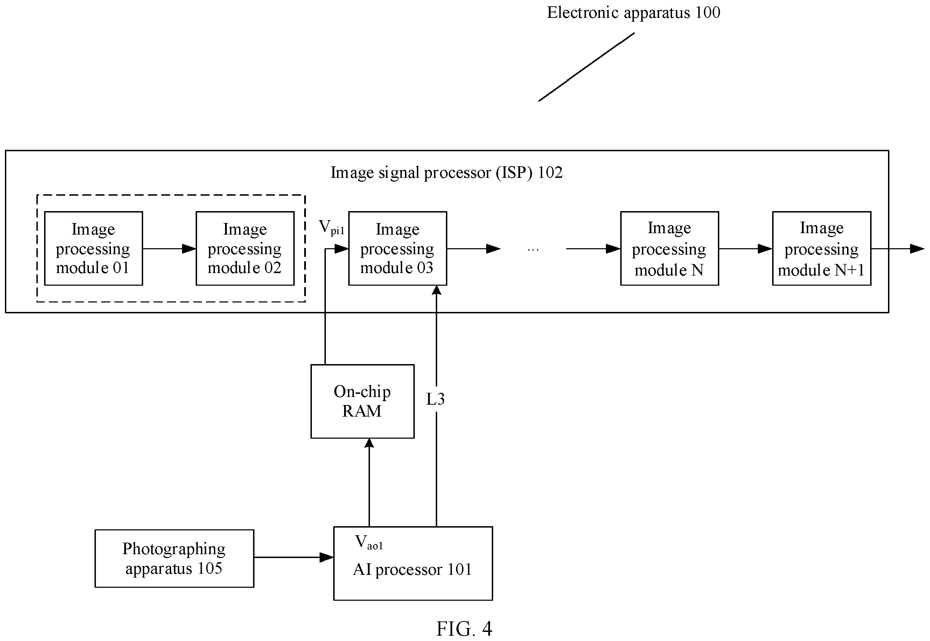

According to the electronic apparatus 100 shown in this embodiment of this application, after the AI processor 101 performs one or more image processing processes on the image data, the ISP 102 performs the remaining image processing process. The AI processor 101 may replace the ISP 102 to perform partial processing, to avoid an information loss of original image data caused by an insufficient processing capability of the ISP 102 in the image processing processes, and improve image processing effect. In addition, in some other implementations, when some image processing processes performed by the conventional ISP cannot achieve preset effect, the image processing process performed by the AI processor 101 may be performed in a plurality of image processing processes performed by the ISP 102 (for example, embodiments of FIG. 4 to FIG. 7), to replace the ISP to perform the image processing process to achieve the preset effect. In this way, flexibility of combining the AI processor and the ISP is achieved.

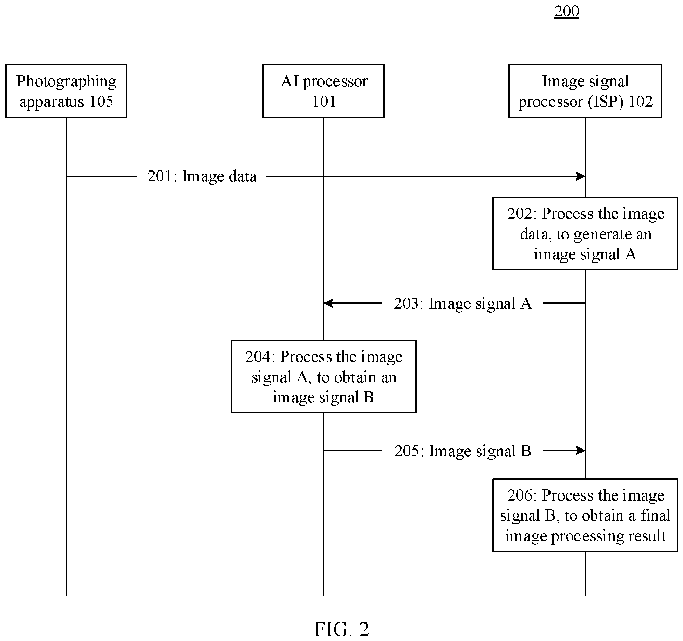

The following describes in detail a process in which the AI processor 101 is combined with the ISP 102 to perform image processing and a hardware structure of an electronic apparatus corresponding to each image processing process. Refer to FIG. 2. FIG. 2 is a schematic flowchart of an image processing method 200 according to an embodiment of this application. The image processing method 200 is applied to the electronic apparatus 100 shown in FIG. 1 or FIG. 3. The image processing method 200 includes the following image processing steps: Step 201: The photographing apparatus 105 provides collected image data to the ISP 102. Step 202: The ISP 102 processes the image data to generate an image signal A. Step 203: The ISP 102 provides the image signal A to the AI processor 101. Step 204: The AI processor 101 performs image processing on the image signal A to generate an image signal B. Step 205: The AI processor 101 provides the image signal B to the ISP 102. Step 206: The ISP 102 performs image processing on the image signal B to obtain an image processing result.

Based on the image processing steps shown in FIG. 2, still refer to FIG. 3. FIG. 3 is another schematic diagram of a structure of an electronic apparatus 100 according to an embodiment of this application. In the electronic apparatus 100 shown in FIG. 3, the ISP 102 may include a plurality of cascaded image processing modules. The plurality of cascaded image processing modules include an image processing module 01, an image processing module 02, an image processing module 03, ..., an image processing module N, and an image processing module N+1. Each image processing module may include a plurality of logic devices or circuits to perform a specific image processing function. For example, the image processing module 01 is configured to perform image processing for black level calibration, the image processing module 02 is configured to perform image processing for shadow calibration, the image processing module 03 is configured to perform image processing for shadow calibration, ..., and the image processing module N+1 is configured to perform RGB-to-YUV conversion processing. Based on an image processing requirement, any one of the plurality of cascaded image processing modules may be provided with an output port and an input port. The output port is used to send an image signal A to the AI processor 101, and the input port is used to obtain an image signal B from the AI processor 101. FIG. 3 schematically shows that the image processing module 02 is provided with an output port Vₚₒ₁, and the image processing module 03 is provided with an input port Vₚᵢ₁. In FIG. 3, the ISP 102 is connected to the photographing apparatus 105, to obtain the image data from the photographing apparatus 105. The electronic apparatus 100 is further provided with an on-chip RAM, and the on-chip RAM is integrated with the ISP 102 and the AI processor 101 into a chip in the electronic apparatus 100. The on-chip RAM is configured to store the image signal A and the image signal B shown in FIG. 2. In addition, the on-chip RAM is further configured to store intermediate data generated in a running process of the AI processor 101, weight data of each network node in a neural network run by the AI processor 101, and the like. In FIG. 3, to improve a signal transmission speed, an electronic line connection is used between all the output port Vₚₒ₁ of the image processing module 02, the input port Vₚᵢ₁ of the image processing module 03, an input port Vₐᵢ₁ and an output port Vₐₒ₁ of the AI processor 101, and the on-chip RAM.

Further, in a possible implementation, an interrupt signal Z1 is transmitted between the AI processor 101 and the image processing module 02 in the ISP 102 through an electronic line connection L1, and the interrupt signal Z1 indicates the image processing module 02 to store the image signal A to the on-chip RAM. An interrupt signal Z2 is transmitted between the AI processor 101 and the image processing module 03 in the ISP 102 through an electronic line connection L2, and the interrupt signal Z2 indicates the AI processor 101 to store the image signal B to the on-chip RAM. Specifically, the AI processor shown in FIG. 3 may include a task scheduler 1011 and a plurality of computing units 1012. Each component of the task scheduler 1011 and the plurality of computing units 1012 may include a plurality of logical devices or circuits. The task scheduler 1011 may implement the electronic line connection L1 through an input port Vₐᵢ₂ of the AI processor 101 and an output port Vₚₒ₂ of the image processing module 02, and implement the electronic line connection L2 through an output port Vₐₒ₂ of the AI processor 101 and an input port Vₚᵢ₂ of the image processing module 03. In addition, each of the plurality of computing units may implement the electronic line connection to the on-chip RAM through the input port Vₐᵢ₁, to read the image signal A from the on-chip RAM; and may perform the electronic line connection to the on-chip RAM through the output port Vₐₒ₁, to write the image signal B into the on-chip RAM.

In a specific scenario, the ISP 102 obtains image data from the photographing apparatus 105. After shadow calibration and white balance calibration processing are sequentially performed on the image data by respectively using the image processing module 01 and the image processing module 02, an image signal A is generated and stored to the on-chip RAM. After storing the image signal A to the on-chip RAM, the image processing module 02 sends the interrupt signal Z1 to the AI processor 101 through the electronic line connection L1. The AI processor 101 obtains the image signal A from the on-chip RAM in response to the interrupt signal Z1. The AI processor 101 performs demosaicing processing on the image signal A to generate an image signal B, and stores the image signal B to the on-chip RAM. The AI processor 101 stores the image signal B to the on-chip RAM, and then sends the interrupt signal Z2 to the image processing module 03. In response to the interrupt signal Z2, the image processing module 03 reads the image signal B from the on-chip RAM. After color difference calibration, ..., gamma calibration, and RGB-to-YUV domain conversion processing are sequentially performed on the image signal B by respectively using the image processing module 03, ..., the image processing module N, and the image processing module N+1 in the ISP 102, a final image processing result is generated. It should be noted that more image processing modules may be further included before the image processing module 01, so that the ISP 102 performs more image processing processes on the image data.

In an embodiment, the electronic line connection between the AI processor 101 and the ISP 102 is also referred to as a physical connection or an interrupt connection. The AI processor 101 and the ISP 102 implement sending and receiving of an interrupt signal through the connection, so that the interrupt signal does not need to be forwarded by another processor such as a CPU, and does not need to be relatedly controlled by the CPU. This can improve a transmission speed of the interrupt signal, and can reduce an image output delay in some real-time videos, which helps improve user experience. Specifically, the interrupt connection includes an interrupt signal processing hardware circuit configured to implement sending and receiving functions of the interrupt signal and a connection line for transmitting a signal, to implement receiving and sending of the interrupt signal. The interrupt signal processing hardware circuit includes but is not limited to a conventional interrupt controller circuit. For a specific implementation solution of the interrupt signal processing hardware circuit, refer to related descriptions of the interrupt controller in the conventional technology, and details are not described herein again.

In embodiments shown in FIG. 2 and FIG. 3, the image processing process performed by the AI processor 101 is set between the plurality of image processing processes performed by the ISP 102, to replace or supplement some intermediate image processing processes performed by the ISP 102. In some other possible implementations, the AI processor 101 may directly obtain the image data from the photographing apparatus 105, and perform a front-end image processing process. In this implementation, the AI processor 101 may replace some front-end image processing modules in the ISP 102 to perform a corresponding image processing process. In this case, the AI processor 101 may directly communicate with a back-end image processing module in the ISP 102. For a hardware structure of this implementation, refer to FIG. 4. FIG. 4 is a schematic diagram of still another hardware structure according to an embodiment of this application.

In FIG. 4, a structure of the ISP 102 and a structure of the AI processor 101 are respectively the same as the structure of the ISP 102 and the structure of the AI processor 101 shown in FIG. 3. For details, refer to related descriptions of the embodiment shown in FIG. 3. Details are not described herein again. Different from the embodiment shown in FIG. 3, in this embodiment, the AI processor 101 skips the image processing module 01 and the image processing module 02, and communicates with the image processing module 03. Specifically, electronic line connections are used between both the input port Vₚᵢ₁ of the image processing module 03 and the output port Vₐₒ₁ of the AI processor 101 and the on-chip RAM. An interrupt signal Z3 is transmitted between the AI processor 101 and the image processing module 03 in the ISP 102 through an electronic line connection L3, and the interrupt signal Z3 indicates the AI processor 101 to store an image signal C to the on-chip RAM. Based on the hardware structure shown in FIG. 4, in a specific scenario, the AI processor 101 obtains image data from the photographing apparatus 105, and then performs noise cancellation on the image data to generate an image signal C, and stores the image signal C to the on-chip RAM. After storing the image signal C to the on-chip RAM, the AI processor 101 sends the interrupt signal Z3 to the image processing module 03 through the electronic line connection L3. The image processing module 03 obtains the image signal C from the on-chip RAM in response to the interrupt signal Z3. After image processing processes such as black level calibration, shadow calibration, white balance calibration, and RGB-to-YUV domain conversion are sequentially performed on the image signal C by respectively using the image processing module 03,..., the image processing module N, and the image processing module N+1 in the ISP 102, a final image processing result is generated.

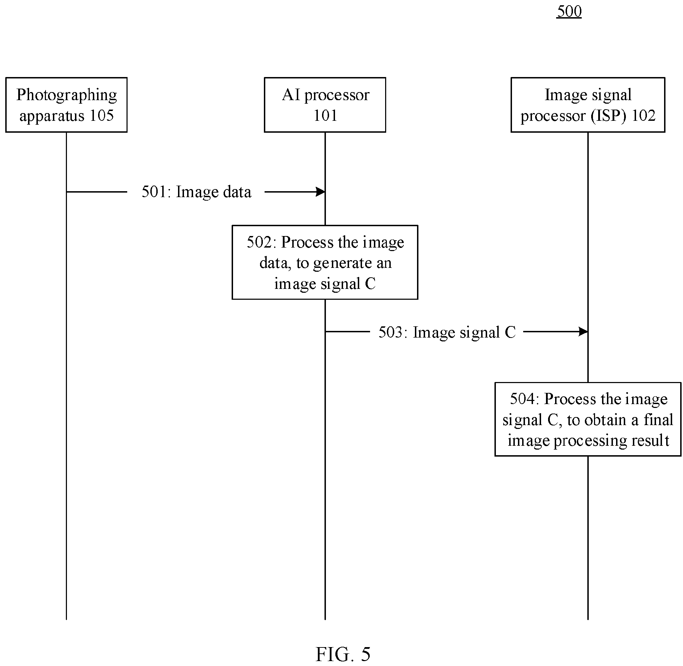

Still refer to FIG. 5. FIG. 5 is another flowchart of an image processing method 500 according to an embodiment of this application. The image processing method 500 is applied to the electronic apparatus 100 shown in FIG. 1 or FIG. 4. The image processing method 500 includes the following image processing steps: Step 501: The photographing apparatus 105 provides collected image data to the AI processor 101. Step 502: The AI processor 101 processes the image data to generate an image signal C. Step 503: The AI processor 101 provides the image signal C to the ISP 102. Step 504: The ISP 102 processes the image signal C to obtain an image processing result.

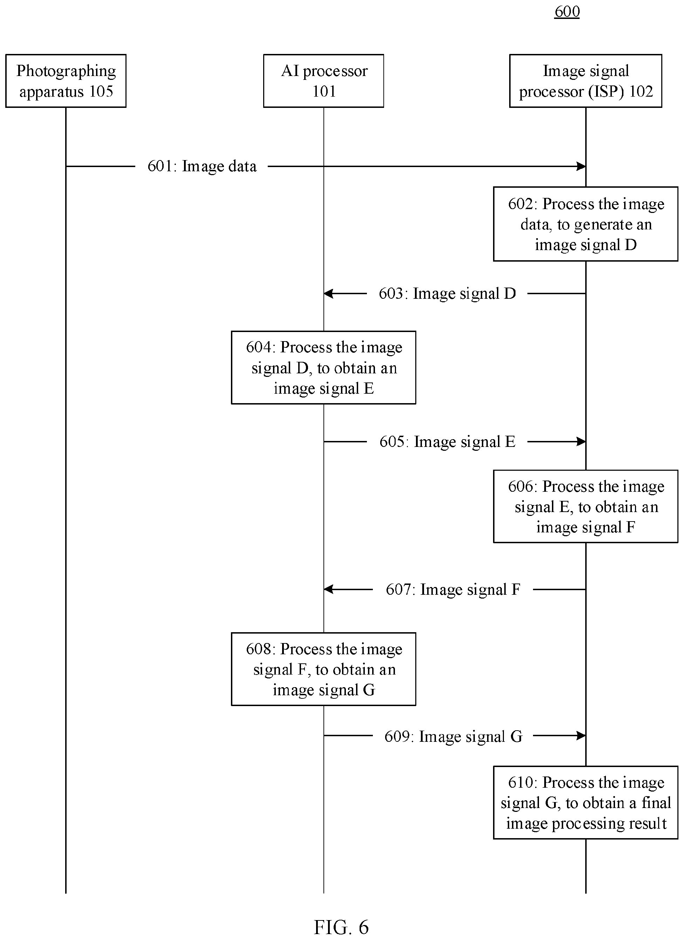

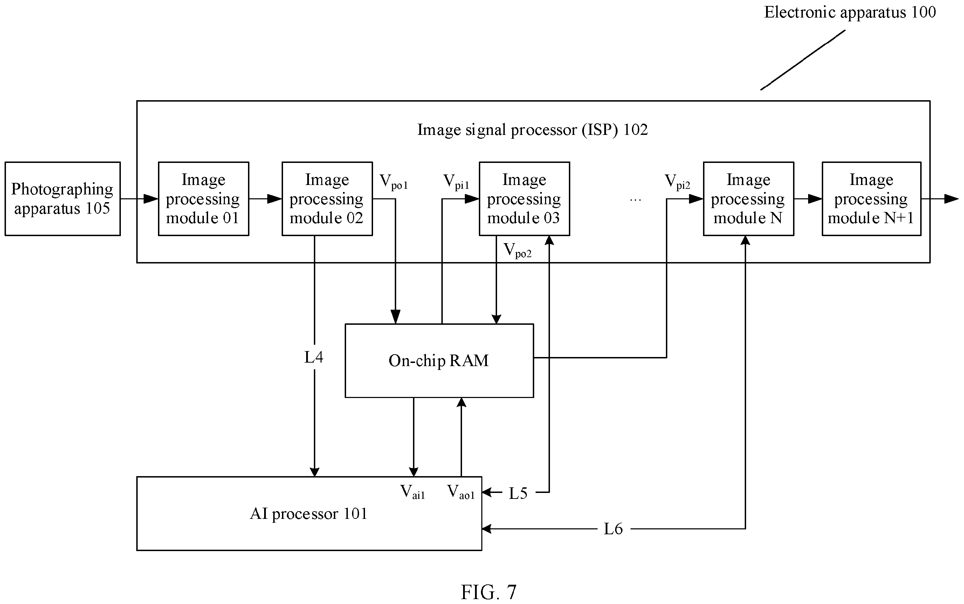

In this embodiment of this application, in a procedure of performing the plurality of processing processes on the image data to obtain the image processing result, the AI processor 101 may perform a plurality of continuous image processing processes to process the image data or an image signal, as shown in embodiments shown in FIG. 2 to FIG. 5. In addition, in some other implementations, the AI processor 101 may further perform a plurality of discontinuous image processing processes to process the image data or an image signal. Still refer to FIG. 6. FIG. 6 is still another flowchart of an image processing method 600 according to an embodiment of this application. The image processing method 600 is applied to the electronic apparatus 100 shown in FIG. 1 or FIG. 7. The image processing method 600 includes the following image processing steps: Step 601: The photographing apparatus 105 provides collected image data to the ISP 102. Step 602: The ISP 102 processes the image data to generate an image signal D. Step 603. The ISP 102 provides the image signal D to the AI processor 101. Step 604: The AI processor 101 processes the image signal D to generate an image signal E. Step 605. The AI processor 101 provides the image signal E to the ISP 102. Step 606: The ISP 102 processes the image signal E to generate an image signal F. Step 607: The ISP 102 provides the image signal F to the AI processor 101. Step 608: The AI processor 101 processes the image signal F to generate an image signal G. Step 609: The AI processor 101 provides the image signal G to the ISP 102. Step 610: The ISP 102 processes the image signal G to obtain an image processing result.

Based on the image processing steps shown in FIG. 6, still refer to FIG. 7. FIG. 7 is yet another schematic diagram of a structure of an electronic apparatus 100 according to an embodiment of this application. In FIG. 7, the electronic apparatus includes an Al processor 101, an ISP 102, and an on-chip RAM. Same as the ISP 102 shown in FIG. 3, the ISP 102 in the electronic apparatus shown in FIG. 7 also includes an image processing module 01, an image processing module 02, an image processing module 03, ..., an image processing module N, and an image processing module N+1 that are cascaded. Structures and functions of modules are the same as those of the modules in the ISP 102 shown in FIG. 3, and details are not described herein again. An internal structure of the AI processor 101 shown in FIG. 7 is the same as the internal structure of the AI processor 101 shown in FIG. 3, and details are not described herein again. The on-chip RAM is configured to store the image signal D, the image signal F, the image signal F, and the image signal G. Different from the electronic apparatus shown in FIG. 3 or FIG. 4, two of the foregoing plurality of cascaded image processing modules are provided with output ports, and another two of the foregoing plurality of cascaded image processing modules are provided with output ports, as shown in FIG. 7. An output port of the image processing module 02 and an output port of the image processing module 03 are respectively provided with an output port Vₚₒ₁ and an output port Vₚₒ₂, and an input port of the image processing module 03 and an input port of the image processing module N are respectively provided with an input port Vₚᵢ₁ and an input port Vₚᵢ₂. The output ports of the image processing module 02 and the image processing module 03 are respectively configured to output the image signal D and the image signal F shown in FIG. 6. The input port of the image processing module 03 and the input port of the image processing module N are respectively configured to input the image signal E and the image signal G shown in FIG. 6. In FIG. 7, the electronic line connection is performed between each of the output port Vₚₒ₁ of the image processing module 02 and the output port Vₚₒ₂ of the image processing module 03 and the on-chip RAM, the electronic line connection is performed between the input port Vₚᵢ₁ of the image processing module 03 and the input port Vₚᵢ₂ of the image processing module N and the on-chip RAM, and the electronic line connection may also be performed between the input port Vₐᵢ₁ and the output port Vₐₒ₁ of the AI processor 101 and the on-chip RAM. In addition, an interrupt signal Z4 is transmitted between the AI processor 101 and the image processing module 02 in the ISP 102 through an electronic line connection L4, and the interrupt signal Z4 indicates the image processing module 02 to store the image signal D to the on-chip RAM. An interrupt signal Z5 and an interrupt signal Z6 are transmitted between the AI processor 101 and the image processing module 03 in the ISP 102 through an electronic line connection L5, and the interrupt signal Z5 indicates the AI processor 101 to store the image signal E to the on-chip RAM, and the interrupt signal Z6 indicates the image processing module 03 to store the image signal F to the on-chip RAM. An interrupt signal Z7 is transmitted between the AI processor 101 and the image processing module N in the ISP 102 through an electronic line connection L6, and the interrupt signal Z7 indicates the AI processor 101 to store the image signal G to the on-chip RAM.

FIG. 3 to FIG. 7 each show schematically the image processing method shown in embodiments of this application and a hardware structure of an electronic apparatus corresponding to each image processing method. It should be noted that the ISP 102 in the electronic apparatus shown in this embodiment of this application may be further provided with more output ports and input ports, so that images processed by more processing processes are transmitted between the AI processor 101 and the ISP 102, and further the AI processor 101 can perform more image processing processes at intervals. In other words, the AI processor 101 and the ISP 102 may alternately perform processing, so that the AI processor 101 and the ISP 102 jointly complete the image processing process to obtain the processing result, to replace the image processing process of the conventional ISP.

Based on the electronic apparatus shown in FIG. 3, FIG. 4, or FIG. 7, in a possible implementation, the ISP 102 and the AI processor 101 store the data to the on-chip RAM shown in FIG. 3, FIG. 4, or FIG. 7 in a form of an image block. The image block may be a partial image signal in a frame of image signal (for example, the frame of image signal has 1280 rows of pixels, and an image signal formed by 320 rows of pixels is stored to the on-chip RAM). In a specific implementation, each image processing module in the ISP 102 performs image processing in a unit of one row of pixels, and the ISP 102 stores the processed image signal to the on-chip RAM row by row. When the ISP 102 has stored the image signal to the on-chip RAM (for example, a quantity of rows of the stored image signal reaches a preset threshold, a size of a written image signal reaches a preset threshold, or an image signal is stored in an end address in a storage address allocated to the ISP 101), the ISP 102 stops continuing to transmit the image signal to the on-chip RAM, and sends the interrupt signal Z1 to the AI processor through the electronic line connection L1 shown in FIG. 3. The AI processor 101 may store the image signal to the on-chip RAM in a storage manner same as that of the ISP 102. After storing the image signal to the on-chip RAM, the ISP 102 sends the interrupt signal Z2 to the AI processor through the electronic circuit connection L2 shown in FIG. 3. Further, the on-chip RAM may be logically divided into a first storage area and a second storage area. The ISP 102 stores the image signal in the first storage area in a form of an image block, and the AI processor 101 stores the image signal in the second storage area in a form of an image block. In this way, image processing performed by the ISP 102 and image processing performed by the AI processor 101 can be performed in parallel, so that waiting time of the AI processor 101 and the ISP 102 is reduced, and a transmission rate of the image signal is improved.

In addition, when the ISP 102 stores, in the form of the image block, the image block to the on-chip RAM shown in FIG. 3, FIG. 4, or FIG. 7, the ISP 102 may further send, to the AI processor 101, an indication signal indicating that a current image block is a start position of a frame of image. Specifically, as shown in FIG. 3, an electronic line connection L7 exists between the image processing module 02 in the ISP 102 and the AI processor 101 is used to send an interrupt signal Z8 to the AI processor 101. The interrupt signal Z8 indicates that the image signal A is the start position of the frame of image.

In a possible implementation of this embodiment of this application, the electronic apparatus further includes an off-chip memory 106, as shown in FIG. 8. The off-chip memory 106 may store a plurality of frames of images, and the plurality of frames of images may be a previous frame of image, previous two frames of images, or a plurality of frames of images before a current image. Because the off-chip memory 106 has a larger storage space, the off-chip memory 106 may replace the on-chip RAM to store image data of a larger unit. An image signal stored in the off-chip memory 106 may be an image signal processed by the AI processor 101, or an image signal provided to the AI processor 101 for processing by the AI processor 101. When processing a current image signal, the AI processor 101 may further obtain image information of a previous frame of image signal or previous several frames of image signals of the current image signal from the off-chip memory 106, and then process the current image signal based on the image information of the previous frame of image signal or the previous several frames of image signals. In addition, the AI processor 101 may further store a processed image signal to the off-chip memory 106. The off-chip memory 106 may include a random access memory (RAM). The random access memory may include a volatile memory (for example, an SRAM, a DRAM, a DDR (double data rate SDRAM, Double Data Rate SDRAM), or an SDRAM) and a non-volatile memory. In addition, the off-chip memory 106 may store an executable program of an image processing model running in the AI processor 101, and the AI processor loads the executable program to run the image processing model.

For example, the memory 103, for example, the on-chip RAM, may be configured to store a single frame of image or an image block in a single frame of image. The off-chip memory 106 is configured to store a plurality of frames of images. Therefore, for the method shown in FIG. 2, FIG. 5, or FIG. 7, the image signal transmitted between the AI processor 101 and the AI processor 101 is divided by a unit size, and image information of a larger unit is transmitted by using the off-chip memory 106, so that a space shortage of the on-chip RAM is compensated, and a faster transmission speed of the on-chip RAM is effectively used, thereby achieving performance optimization.

In this embodiment of this application, the electronic apparatus 100 may further include a controller 104, as shown in FIG. 8. The controller 104 may be an integrated controller, and is located on a same chip in which the AI processor 101, the ISP 102, and the memory 103 are located. The controller 104 runs a necessary software program or software plug-in to drive the controller 101 to control running of the ISP 102, control running of the AI processor 101, and control communication between the ISP 102 and the AI processor 101, so that the image processing method shown in FIG. 2, FIG. 5, or FIG. 6 is implemented. The necessary software program or software plug-in can replace the electronic line connection between the AI processor 101 and the ISP 102 as a communication medium. In a specific implementation, the controller 104 may be various digital logic devices or circuits, including but not limited to: a CPU, a GPU, a microcontroller, a microprocessor, a DSP, or the like. In addition, the controller 104 may also be disposed separately from the AI processor 101, the ISP 10, and the memory 10. This is not limited in this embodiment. Further, both the controller 104 and the AI processor 101 may also be integrated into a same logical operation device (for example, a CPU), and the same logical operation device implements functions performed by the controller 104 and the AI processor 101 in this embodiment of this application. In practice, the controller 104 may determine, based on various information (such as light intensity information, white balance information, or mosaic information) indicated by the image data collected by the photographing apparatus 105, whether to use the ISP 102 to combine with the AI processor 101 to process the image data, and determine an image processing model selected when the ISP 102 is selected to combine with the AI processor 101 to process the image data. The following describes in detail control performed by the controller 104 on the foregoing components and image processing by using the light intensity information as an example. The controller 104 compares, based on the light intensity information indicated by the image data, the information with a preset image light intensity threshold, and when determining, based on a comparison result, that the image light intensity threshold cannot be reached after the image light intensity processing is performed by using the ISP 102, the AI processor 101 may be used to perform light intensity processing on the image data or the image signal. In addition, the AI processor 101 may run a plurality of image processing models used for light intensity processing. The controller determines, based on a difference between the light intensity information indicated by the image data and the image light intensity threshold, which image processing model is selected. After determining the selected image processing model, the controller 104 may deliver, to the AI processor 101, storage address information of an algorithm program, a parameter, or instructions that is in the memory 103 or the off-chip memory 106 and that is used to store the image processing model, so that various computing units in the AI processor 101 obtain the algorithm program, the parameter, or the instructions from the storage address, to run the image processing model, and perform light intensity processing on the image data or the image signal. When a plurality of image processing models are required to process the image data or the image signal, the controller may further deliver, to the AI processor 101, information indicating a running sequence or priority of the plurality of image processing models. It should be noted that, in this embodiment of this application, the controller 104 may detect, in real time or periodically, various information indicated by the image data. When determining, based on a detection result, that a currently running image detection model is not applicable, the controller 104 may replace the selected image processing model in a timely manner (for example, when an ambient light intensity becomes weak, an image processing model used to process the light intensity is replaced), and then deliver storage address information of an executable program of a replaced image processing model to the AI processor 101, so that the AI processor 101 runs the replaced image processing model when performing image processing in a next image processing period. Therefore, according to the electronic apparatus in this embodiment of this application, a used image processing model may be dynamically adjusted based on a change of an external environment or a change of collected image data, so that when a user uses the electronic apparatus in this embodiment of this application to change a scene (for example, change from an outdoor area to an indoor area or from an area with strong light to an area with weak light), the user can perform targeted processing on the captured image, thereby improving image processing effect and improving user experience.

In this embodiment of this application, the image data usually has a preset clock cycle T from a time at which processing is started to a time at which a final image processing result is generated. Based on different image processing models run by the AI processor or different image processing processes executed by the AI processor, duration, in the clock cycle T, occupied when the AI processor executes the image processing process is different. For example, the clock cycle T, of the image data, from the time at which processing is started to the time at which the final image processing result is 33.3 ms, and the duration of performing image processing by the AI processor is 18 ms. In other words, the AI processor is in an idle state in half of the clock cycle T. Based on this, to improve utilization of the AI processor and improve running efficiency of the electronic apparatus, in a possible implementation, the controller 104 may further determine running duration of the used image processing model. When determining that the running duration of the image processing model in the clock cycle T is less than a preset threshold, the controller 104 may further allocate idle time of the AI processor to another AI service. The another AI service may include but not be limited to: a biometric recognition (for example, face recognition or fingerprint recognition) service and a service of adding special effect to an image (for example, adding an object to an image). In this case, an executable program or a parameter of an AI model used to execute the another AI service may also be stored in the off-chip memory 106. Further, when a storage capacity of the memory 103 is large enough, the executable program or the parameter of the AI model of the another AI service may also be stored in the memory 103.

In another possible implementation, the controller 104 may include a plurality of independent controllers, and each of the plurality of independent controllers may be a digital logic device (for example, including but not limited to a GPU or a DSP). The plurality of independent controllers include an ISP controller configured to control running of components in the ISP 102 and an AI controller configured to control running of components in the AI processor 101. In this case, the AI controller may be integrated inside the AI processor 101. In this implementation, the ISP controller and the AI controller may transmit information in an inter-core communication manner. For example, after determining the selected image processing model based on the image data, the ISP controller may send various configuration information to the AI controller before image processing. The configuration information may include but not be limited to: address information of the executable program of the image processing model in the memory 103 or the off-chip memory 106, or priority information of each of the plurality of image processing models. In addition, information transmission between the AI processor 101 and the ISP 102 may also be implemented through communication between the ISP controller and the AI controller. For example, when no electronic line connection is provided between the AI processor 101 and the ISP 102 to transmit the interrupt signal, the ISP 102 may store the image signal to the on-chip RAM and then notify the ISP controller. The ISP controller sends, to the AI controller, information indicating that the image signal is stored to the on-chip RAM. The AI controller controls the computing unit in the AI processor 101 to read the image signal from the on-chip RAM to perform image processing. After storing the image signal to the on-chip RAM, the computing unit in the AI processor 101 notifies the AI controller. The AI controller sends, to the ISP controller, information indicating that the image signal is stored to the on-chip RAM. The ISP controller ISP 102 reads the image signal from the on-chip RAM for processing.

In this embodiment, the electronic apparatus 100 may further include a communication unit (not shown in the figure), and the communication unit includes but is not limited to a short-distance communication unit or a cellular communication unit. The short-range communication unit exchanges information with a terminal that is located outside a mobile terminal and is configured to access the internet by running a short-range wireless communication protocol. The short-distance wireless communication protocol may include but not be limited to: various protocols supported by a radio frequency identification technology, a Bluetooth communication technology protocol, an infrared communication protocol, and the like. The cellular communication unit accesses the internet by running a cellular wireless communication protocol and a radio access network, to implement information exchange between a mobile communication unit and a server that is on the internet and that supports various applications. The communication unit may be integrated into a same SoC with the AI processor 101, the ISP 102, and the like in the foregoing embodiments, or may be disposed separately. In addition, optionally, the electronic apparatus 100 may further include a bus, an input/output port I/O, a storage controller, or the like. The storage controller is configured to control the memory 103 and the off-chip memory 106. The bus, the input/output port I/O, the storage controller, and the like may all be integrated into a same SoC with the ISP 102, the AI processor 101, and the like. It should be understood that, in actual application, the electronic apparatus 100 may include more or fewer components than those shown in FIG. 1 or FIG. 8. This is not limited in this embodiment of this application.

It may be understood that, to implement the foregoing functions, the electronic apparatus includes a corresponding hardware and/or software module for performing each function. With reference to the steps of each example described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the foregoing one or more processors may be divided into functional modules according to the foregoing method examples. For example, different processors corresponding to various functions may be obtained through division, or processors with two or more functions may be integrated into one processor module. The integrated module may be implemented in a form of hardware. It should be noted that, in embodiments, division into the modules is an example, and is merely logical function division. During actual implementation, another division manner may be used.

When each functional module is obtained through division based on each corresponding function, FIG. 9 is a possible schematic diagram of the apparatus 900 in the foregoing embodiment, and the apparatus mentioned above may be further extended. As shown in FIG. 9, the apparatus 900 may include an AI processing module 901 and an image signal processing module 902. The AI processing module 901 is configured to perform first image signal processing on a first image signal to obtain a second image signal, and the first image signal is obtained based on image data output by an image sensor; and the image signal processing module 902 is configured to perform second image signal processing on the second image signal to obtain an image processing result.

In a possible implementation, the image signal processing module 902 is further configured to: receive the image data from the image sensor, and perform third image signal processing on the image data to obtain the first image signal.

In a possible implementation, the third image signal processing includes a plurality of processing processes, and in two adjacent processing processes in the plurality of processing processes, a previous processing process is used to generate a third image signal, and a next processing process is used to process a fourth image signal; and the AI processing module 901 is further configured to perform fourth image signal processing on the third image signal to obtain the fourth image signal.

In a possible implementation, the first image signal processing includes at least one of the following processing processes: noise cancellation, black level calibration, shadow calibration, white balance calibration, demosaicing, color difference calibration, or gamma calibration.

In a possible implementation, the second image signal processing includes at least one of the following processing processes: noise cancellation, black level calibration, shadow calibration, white balance calibration, demosaicing, color difference calibration, gamma calibration, color difference calibration, or RGB-to-YUV domain conversion.

In a possible implementation, the third image signal processing includes at least one of the following processing processes: noise cancellation, black level calibration, shadow calibration, white balance calibration, or demosaicing.

In a possible implementation, the fourth image signal processing includes at least one of the following processing processes: black level calibration, shadow calibration, white balance calibration, demosaicing, or color difference calibration.

The image processing apparatus 900 provided in this embodiment is configured to perform the image processing method performed by the electronic apparatus 100, and may achieve same effect as the foregoing implementation method or apparatus. Specifically, the modules corresponding to FIG. 9 may be implemented by software, hardware, or a combination thereof. For example, each module may be implemented in a form of software, corresponding to a corresponding processor corresponding to the module in FIG. 1, and configured to drive the corresponding processor to work. Alternatively, each module may include two parts: a corresponding processor and corresponding driver software, that is, implemented by combining software and hardware. Therefore, it may be considered that the image processing apparatus 900 logically includes the apparatus shown in FIG. 1, FIG. 3, FIG. 4, FIG. 7, or FIG. 8, and each module includes at least a driver software program of a corresponding function. Details are not described in this embodiment.

For example, the image processing apparatus 900 may include at least one processor and a memory. For details, refer to FIG. 1. The at least one processor may invoke all or some computer programs stored in the memory to control and manage actions of the electronic apparatus 100. For example, the at least one processor may be configured to support the electronic apparatus 100 in performing steps performed by the foregoing modules. The memory may be configured to support the electronic apparatus 100 in storing program code, data, and the like. The at least one processor may implement or execute a plurality of example logical modules described with reference to content disclosed in this application, and may be a combination of one or more microprocessors that implement a computing function, for example, including but not limited to the AI processor 101 and the image signal processor 102 shown in FIG. 1. In addition, the at least one processor may further include another programmable logic device, a transistor logic device, a discrete hardware component, or the like. The memory in this embodiment may include but not be limited to the off-chip memory 106 or the memory 103 shown in FIG. 8.

An embodiment further provides a computer-readable storage medium. The computer-readable storage medium stores computer instructions, and when the computer instructions are run on a computer, the computer is enabled to perform the foregoing related method steps, to implement the image processing method in the foregoing embodiments.

This embodiment further provides a computer program product. When the computer program product is run on a computer, the computer is enabled to perform the foregoing related steps, to implement the image processing method in the foregoing embodiments.

The computer-readable storage medium or the computer program product provided in embodiments of this application is configured to perform the foregoing corresponding methods. Therefore, for beneficial effect that can be achieved, refer to the beneficial effect in the foregoing corresponding methods. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In addition, functional units in embodiments of this application may be integrated into one product, or each of the units may exist alone physically, or two or more units are integrated into one product. Corresponding to FIG. 9, when the foregoing modules are implemented in a form of a software functional unit and sold or used as an independent product, the modules may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic apparatus, comprising:
an artificial intelligence AI processor, configured to perform first image signal processing on a first image signal to obtain a second image signal, wherein the first image signal is obtained based on image data output by an image sensor; and
an image signal processor ISP, configured to perform second image signal processing on the second image signal to obtain an image processing result.

2. The electronic apparatus according to claim 1, wherein the ISP is further configured to:
receive the image data from the image sensor, and perform third image signal processing on the image data to obtain the first image signal.

3. The electronic apparatus according to claim 1 or 2, wherein the third image signal processing comprises a plurality of processing processes, and in two adjacent processing processes in the plurality of processing processes, a previous processing process is used to generate a third image signal, and a next processing process is used to process a fourth image signal; and
the AI processor is further configured to perform fourth image signal processing on the third image signal to obtain the fourth image signal.

4. The electronic apparatus according to any one of claims 1 to 3, wherein the first image signal processing comprises at least one of the following processing processes: noise cancellation, black level calibration, shadow calibration, white balance calibration, demosaicing, color difference calibration, or gamma calibration.

5. The electronic apparatus according to any one of claims 1 to 4, wherein the second image signal processing comprises at least one of the following processing processes: noise cancellation, black level calibration, shadow calibration, white balance calibration, demosaicing, color difference calibration, gamma calibration, color difference calibration, or RGB-to-YUV domain conversion.

6. The electronic apparatus according to claim 2 or 3, wherein the third image signal processing comprises at least one of the following processing processes: noise cancellation, black level calibration, shadow calibration, white balance calibration, or demosaicing.

7. The electronic apparatus according to claim 2, 3, or 6, wherein the fourth image signal processing comprises at least one of the following processing processes: black level calibration, shadow calibration, white balance calibration, demosaicing, or color difference calibration.

8. The electronic apparatus according to any one of claims 1 to 7, wherein the electronic apparatus further comprises:
a memory, coupled to the AI processor and the ISP, and configured to transfer a first image unit in any image signal between the AI processor and the ISP.

9. The electronic apparatus according to claim 8, wherein
the memory, the AI processor, and the ISP are located in a system on chip in the electronic apparatus; and
the memory comprises an on-chip random access memory RAM.

10. The electronic apparatus according to claim 9, wherein
the first image unit comprises any one of the following: a single frame image or an image block in a single frame image.

11. The electronic apparatus according to claim 9 or 10, wherein the electronic apparatus further comprises:
an off-chip memory, located outside the system on chip, and configured to transfer a second image unit in any image signal between the AI processor and the ISP, wherein the second image unit comprises a plurality of frames of images.

12. The electronic apparatus according to any one of claims 1 to 11, wherein the electronic apparatus further comprises:
a controller, configured to trigger the AI processor to perform the first image signal processing, and control the ISP to perform the second image signal processing.

13. The electronic apparatus according to any one of claims 1 to 12, wherein an interrupt signal is transmitted between the AI processor and the ISP through an electronic line connection.

14. An image processing method, wherein the method comprises:
controlling an artificial intelligence AI processor to perform first image signal processing on a first image signal to obtain a second image signal, wherein the first image signal is obtained based on image data output by an image sensor; and
controlling an image signal processor ISP to perform second image signal processing on the second image signal to obtain an image processing result.

15. A computer-readable storage medium, wherein the computer-readable storage medium stores a computer program, and when being executed by at least one processor, the computer program is used to implement the method according to claim 14.

16. A computer program product, wherein when being executed by at least one processor, the computer program product is used to implement the method according to claim 14.
